# EUROPÄISCHE PATENTSCHRIFT

(11) **EP 0 895 499 B1**
(45) Veröffentlichungstag und Bekanntmachung des Hinweises auf die Patenterteilung: **01.08.2001**
(21) Anmeldenummer: 98904035.7
(22) Anmeldetag: 07.01.1998
(51) Int. Cl.: B60R 1/06

(54) **VERSTELLBARER RÜCKSPIEGEL FÜR EIN FAHRZEUG**
ADJUSTABLE REAR-VIEW MIRROR FOR A VEHICLE
RETROVISEUR AJUSTABLE POUR VEHICULES

(30) Priorität: 17.01.1997 AT 6797797
(43) Veröffentlichungstag der Anmeldung: 10.02.1999
(73) Patentinhaber: Magna Auteca Zweigniederlassung der Magna Holding AG, 8160 Weiz (AT)
(72) Erfinder: SCHILLEGGER, Peter, A-8302 Nestelbach (AT); FINK, Gerald, A-8181 St. Ruprecht/Raab (AT); PACHER, Wolfgang, A-8200 Gleisdorf (AT)
(74) Vertreter: Butenschön, Antje, Dr.
(86) Internationale Anmeldenummer: EP9800031
(87) Internationale Veröffentlichungsnummer: WO9831565

(56) Entgegenhaltungen:
- EP-A- 0 460 666
- WO-A-95/05295
- FR-A- 2 347 231
- US-A- 3 628 862
- PATENT ABSTRACTS OF JAPAN vol. 9, no. 22 (M-354) [1745] , 30.Januar 1985 & JP 59 167346 A (ASUMO), 20.September 1984,

## Beschreibung

Die vorliegende Erfindung bezieht sich auf einen verstellbaren Rückspiegel, insbesondere Außenspiegel, für ein Kraftfahrzeug, wobei ein erstes Element an dem Fahrzeug festlegbar ist und ein mit dem ersten Element schwenkbar verbundenes zweites Element eine Halterung für einen Spiegel aufweist bzw, ausbildet, wobei die zwei Elemente als einander wenigstens teilweise umgreifende schalenförmige Elemente ausgebildet sind und aneinander über einen Teil einer Kugeloberfläche bildende äußere und innere Begrenzungsflächen geführt bzw. gelagert sind und wobei ein Antrieb zwischen dem ersten und dem zweiten Element vorgesehen ist.

Aus der AT-B 256 645 und der DE-B 12 41 295 ist jeweils ein mit einer elektrischen Leuchte kombinierter Kraftfahrzeug-Außenrückblickspiegel bekannt geworden, wobei zwei einander teilweise umgreifende, schalenförmige Elemente vorgesehen sind und im Spiegel eine Leuchte integriert sein soll, wobei jedoch keinerlei Antrieb zwischen den einzelnen schalenförmigen Elementen vorgesehen ist.

Der DE-A 39 14 334 sowie der FR-A 2 649 653 sind verstellbare Rückspiegel der eingangs genannten Art zu entnehmen, wobei halbkugelförmige, aneinander geführte Reibschalen jeweils mit einem Antrieb für eine gegenseitige Verstellbarkeit der Reibschalen ausgebildet sind. Für die Verstellung bzw. als Antrieb sind bei diesen bekannten Ausbildungen konstruktiv aufwendige Zahnstangentriebe vorgesehen, welche eine Vielzahl von zusätzlichen Bauteilen und einen großen Platzbedarf erforderlich machen.

Aus der DE-C 36 29 320 ist weiters ein fembedienbarer Rückspiegel für ein Kraftfahrzeug mit einer Betätigungseinrichtung und einer verdrehbaren Lagereinrichtung für den Rückspiegel bekanntgeworden, wobei beide Einrichtungen durch Bowdenzüge miteinander verbunden sind. Die Betätigungsvorrichtung dieser bekannten Einrichtung besteht hiebei aus zwei Spindeltrieben, die durch zwei Rändelräder antreibbar sind und mit den Kabeln von wenigstens zwei Bowdenzügen zur Verstellung der Lagereinrichtung in zwei Raumrichtungen verbunden sind.

Der DE-A 38 20 578 ist ein Außenspiegel für Kraftfahrzeuge entnehmbar, umfassend ein äußeres Gehäuse, das eine Spiegelplatte und eine Einrichtung mit einem Getriebe und einem Elektromotor aufweist, welche eine Drehbewegung des Gehäuses um eine feste Achse erzeugt. Mittels einer Steuerschaltung wird hiebei der Rückspiegel bei einer Bewegung des Fahrzeuges in seine Funktionsstellung verschwenkt, während bei Stillstand des Motors des Fahrzeuges der Rückspiegel in eine an das Fahrzeug angeklappte Stellung geschwenkt wird.

Weitere bekannte Ausbildungen verstellbarer Rückspiegel für Kraftfahrzeuge der eingangs genannten Art sind beispielsweise der EP-B 0 287 181, der EP-B 0 675 817, der DE-A 36 33 010, der DE-A 40 30 010 sowie der DE-A 41 15 876 zu entnehmen. Bei diesen bekannten Ausführungen ist jeweils ein Trägerelement vorgesehen, welches am Fahrzeug festlegbar ist, wobei an einem freien Ende dieses Trägerelementes gelenkig ein einen Spiegel tragendes zweites Element schwenkbar festgelegt ist, wobei im Bereich dieser schwenkbaren Verbindung eine konstruktiv zumeist äußerst aufwendige Gelenkverbindung für eine Verschwenkung des Spiegelelementes relativ zum Trägerelement vorgesehen ist. Weiters ist im Bereich dieser Gelenkverbindung wenigstens ein Getriebe oder unmittelbar ein Antriebsmotor zur Ermöglichung der gegenseitigen Verschwenkbarkeit vorgesehen. Nachteilig bei diesen bekannten Ausführungsformen ist allgemein, daß eine im wesentlichen punktförmige Lagerung der zueinander verschwenkbaren Elemente vorgesehen ist, welche insbesondere gegenüber Erschütterungen oder Vibrationen relativ instabil ist. Weiters ist nachteilig, daß auf sehr kleinem Raum im Bereich des Schwenkpunktes im wesentlichen die gesamte Schwenkmechanik und somit der größte Teil des Gewichtes der Vorrichtung konzentriert ist.

Die vorliegende Erfindung setzt sich ausgehend von einem Rückspiegel der eingangs genannten Art zum Ziel, einen Rückspiegel zu schaffen, welcher bei einfachem Aufbau eine Herabsetzung der Vibrationen und somit insgesamt eine einfache und stabile Lagerung ermöglicht. Zur Lösung dieser Aufgabe ist der erfindungsgemäße Rückspiegel im wesentlichen daclurch gekennzeichnet, daß das äußere Element an seiner Innenfläche teilweise mit einer sich längs eines Kugelkreises der Innenfläche des äußeren Elementes erstreckenden Verzahnung ausgebildet ist, mit welcher ein Ritzel eines im Inneren des inneren Elementes gelagerten Antriebes für die Verstellung des äußeren Elementes relativ zum inneren Element kämmt. Die erfindungsgemäße Ausbildung erlaubt eine besonders einfache Ausbildung der insbesondere automatischen bzw. motorgetriebenen Verschwenkung der Elemente des erfindungsgemäßen Rückspiegels zueinander. Derart läßt sich in großem Abstand vom Schwenkpunkt das Ritzel anordnen, welches mit einer Verzahnung auf der Innenseite des äußeren Elementes kämmt, sodaß eine Konzentrierung des Gewichts der Komponenten im Bereich des Schwenkmittelpunktes, wie dies bei Konstruktionen gemäß dem Stand der Technik der Fall war und zu großen Vibrationen führt, vermieden werden kann. Da beim erfindungsgemäßen Rückspiegel zwei schalenförmige Elemente vorgesehen sind, welche aneinander über Teile einer Kugeloberfläche abgestützt sind, gelingt es, in einfacher Weise eine große Fläche für die gegenseitige Lagerung und Abstützung der schalenförmigen Elemente des erfindungsgemäßen Rückspiegels zur Verfügung zu stellen, sodaß insgesamt bei einer einfachen Bauweise auch unter Verwendung leichter Materialien und einer geringen Anzahl von Bauteilen eine stabile Konstruktion erzielbar ist. Weiters lassen sich die für die Bewegung der zwei schalenförmigen Elemente zueinander erforderlichen Betätigungs- und Antriebseinrichtungen in einem größeren Raum im Inneren des inneren schalenförmigen Elementes in großem Abstand vom tatsächlichen Schwenkmittelpunkt unter Optimierung der Gewichtsverteilung des gesamten Rückspiegels anordnen, wodurch ebenfalls die Vibrationseigenschaften des erfindungsgemäßen Rückspiegels verbessert werden.

Für eine konstruktiv besonders einfache Ausbildung, bei welcher sämtliche Elemente des Antriebes im wesentlichen im Inneren des inneren, schalenförmigen Elementes aufgenommen sind, ist gemäß einer weiteren bevorzugten Ausführungsform vorgesehen, daß das Ritzel des im Inneren des inneren Elementes gelagerten Antriebes durch eine Ausnehmung des inneren Elementes vorragt.

Um eine Verschwenkung des Spiegels in sämtlichen Richtungen in einfacher Weise zu ermöglichen, ist darüberhinaus gemäß einer weiteren bevorzugten Ausführungsform vorgesehen, daß zwei gegebenenfalls unter Zwischenschaltung eines Untersetzungsgetriebes mit Ritzel ausgebildete Antriebsmotoren im Inneren des inneren Elementes gelagert sind, deren mit der Innenfläche des äußeren Elementes kämmende Ritzel miteinander einen im wesentlichen rechten Winkel einschließen und daß die mit den Ritzeln kämmenden Verzahnungen an der Innenfläche des äußeren Elementes sich jeweils über einen dem anderen Ritzel zugeordneten Verschwenkwinkel des äußeren bezüglich des inneren Elementes entsprechenden Winkelbereich erstrecken. Durch Vorsehen von Untersetzungsgetrieben lassen sich einfache und kleinbauende Motoren einsetzen, wobei sich durch gegenseitige Anordnung der Antriebsritzel unter einem rechten Winkel auch sämtliche räumlichen Positionen des Spiegels einnehmen lassen. Da bei Verstellung eines Ritzels das andere Ritzel in seiner Verzahnung auf der Innenseite des äußeren schalenförmigen Elementes nachgeführt werden muß, ist darüberhinaus erfindungsgemäß vorgesehen, daß sich die Verzahnungen jeweils bogenförmig über einen entsprechenden Winkelbereich an der Oberfläche des äußeren Elementes des erfindungsgemäßen Rückspiegels erstrecken.

Für ein automatisches Korrigieren bzw. Nachführen eines Ritzels zur Erzielung einer gewünschten Positionierung des erfindungsgemäßen Rückspiegels bei Verstellung des jeweils anderen Ritzels wird weiters bevorzugt vorgeschlagen, daß die Bewegung der Ritzel bzw, der Antriebsmotoren miteinander gekoppelt bzw, aufeinander abgestimmt ist.

Zur Erzielung eines entsprechend großen Verstell- bzw. Schwenkbereiches des erfindungsgemäßen Rückspiegels wird darüberhinaus bevorzugt vorgeschlagen, daß die Verschwenkbarkeit der schalenförmigen Elemente zueinander ausgehend von einer mittleren Lage maximal ± 25°, insbesondere ± 15°, beträgt.

Für eine weitere Verbesserung der gegenseitigen Abstützung und Positionierung der schalenförmigen Elemente des erfindungsgemäßen Rückspiegels wird bevorzugt vorgeschlagen, daß die zwei schalenförmigen Elemente im Bereich des Mittelpunktes der kugelförmigen Oberflächen aneinander zusätzlich über ein balliges Lager oder ein Kreuzgelenk abgestützt sind und daß das innere Element ausgehend von dem balligen Lager im Mittelpunkt mit einer schräg nach außen verlaufenden Kante ausgebildet ist, deren Neigungswinkel relativ zu einem Durchmesser der kugelförmigen Oberfläche wenigstens dem maximalen Verschwenkwinkel der schalenförmigen Elemente zueinander entspricht. Neben der flächigen Abstützung über die kugelförmigen Begrenzungsflächen der schalenförmigen Elemente aneinander definiert ein derartiges balliges Lager oder ein Kreuzgelenk einen exakten Schwenkpunkt der zueinander beweglichen Elemente und erhöht derart die gegenseitige Lagerstabilität. Um eine Kollision zwischen den zwei schalenförmigen Elementen bei der Verschwenkung derselben zu vermeiden, ist erfindungsgemäß weiters vorgesehen, daß das innere Element ausgehend von dem balligen Lager im Mittelpunkt mit einer schräg nach außen verlaufenden Kante ausgebildet ist, deren Neigungswinkel relativ zu einem Durchmesser der kugelförmigen Oberfläche wenigstens dem maximalen Verschwenkwinkel der schalenförmigen Elemente zueinander entspricht.

Für eine weitere Erhöhung der inneren Stabilität der Gesamtkonstruktion des erfindungsgemäßen Rückspiegels und zur Vermeidung von gegenseitigen Verschiebungen zwischen den einzelnen Elementen ist darüberhinaus bevorzugt vorgesehen, daß ausgehend von dem balligen Lager oder dem Kreuzgelenk in an sich bekannter Weise eine Verbindung mit der äußeren Schale an der vom Lager abgewandten Seite vorgesehen ist.

Für eine besonders geschützte Aufnahme des inneren schalenförmigen Elementes des erfindungsgemäßen Rückspiegels, welches darüberhinaus die gesamte Schwenkmechanik aufnimmt, wird erfindungsgemäß weiters bevorzugt vorgeschlagen, daß das äußere Element das innere Element vollständig umgibt und daß wenigstens ein Verbindungsfortsatz zur Festlegung des inneren Elementes am Fahrzeug durch eine Ausnehmung in dem äußeren Element hindurchgeführt ist.

Zur weiteren Gewichtsoptimierung wird darüberhinaus bevorzugt vorgeschlagen, daß die Achsen der(s) Antriebsritzel(s) im Bereich der äußeren Umrandung des Rückspiegels im Innenraum des inneren Elementes angeordnet ist (sind), wodurch sich ein größtmöglicher Abstand zum Schwenkpunkt ergibt, sodaß der Antrieb mit einem besonders geringen Kraftaufwand betrieben werden kann.

Für eine besonders einfache Anordnung des erfindungsgemäßen Rückspiegels ist gemäß einer bevorzugten Ausführungsform vorgesehen, daß in an sich bekannter Weise das innere schalenförmige Element am Fahrzeug festlegbar ist und daß das äußere schalenförmige Element zumindest an der von der Befestigung des inneren Elementes am Fahrzeug abgewandten Seite das innere Element überragt und eine Halterung für einen Spiegel ausbildet bzw. aufweist. Derart läßt sich das innere schalenförmige Element einfach mit einem entsprechenden Fortsatz oder einer Halterung für die Festlegung am Fahrzeug ausbilden, wobei auch entsprechende gestalterische Abänderungen und Anpassungen ohne Beeinträchtigung der Verschwenkbarkeit der Elemente des Rückspiegels möglich sind. Weiters läßt sich auch das äußere schalenförmige Element bei entsprechender Formgebung als Halterung für einen Spiegel ausbilden bzw. mit einer derartigen Halterung versehen.

Die Erfindung wird nachfolgend anhand von in der beiliegenden Zeichnung schematisch dargestellten Ausführungsbeispielen des erfindungsgemäßen Rückspiegels näher erläutert. In dieser zeigen:
Fig. 1 einen Schnitt durch eine erste Ausführungsform eines erfindungsgemäßen Rückspiegels;
Fig. 2 eine Ansicht in Richtung des Pfeiles II der Fig. 1, wobei Fig. 1 ein Schnitt nach der Linie I-I der Fig. 2 ist;
Fig. 3 eine perspektivische räumliche Ansicht in des Innere des inneren schalenförmigen Elementes des erfindungsgemäßen Rückspiegels entsprechend der Ausbildung gemäß Fig. 2;
Fig. 4 eine perspektivische Ansicht des Rückspiegels der Ausbildung gemäß den Fig. 1 bis 3; und
Fig. 5 einen Schnitt in gegenüber der Fig. 1 vergrößertem Maßstab durch eine weitere abgewandelte Ausführungsform eines erfindungsgemäßen Rückspiegels.

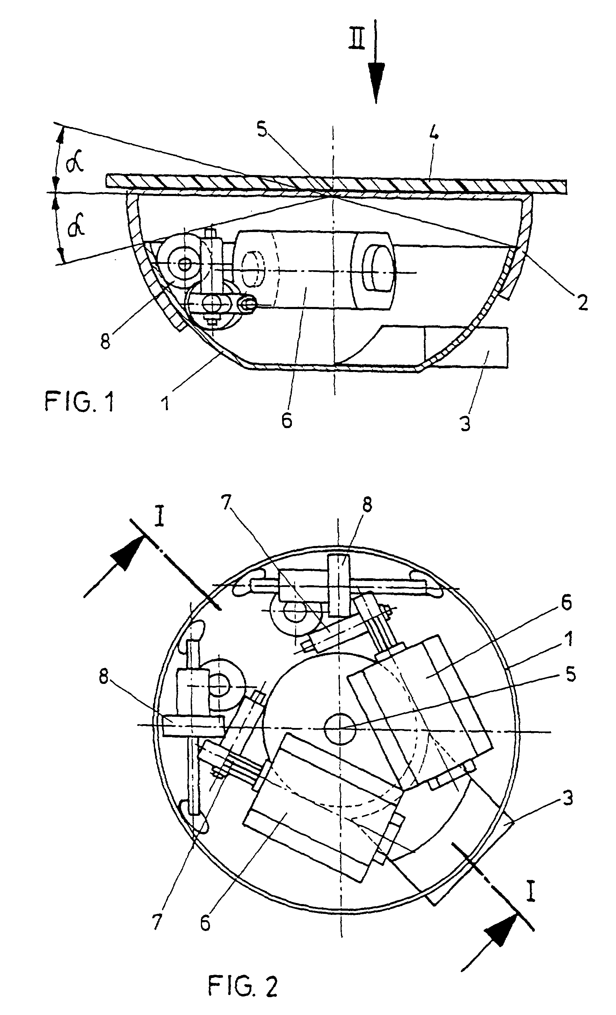

In der Darstellung gemäß den Fig. 1 und 2 ist mit 1 eine inneres schalenförmiges Element eines Rückspiegels bezeichnet, welches teilweise von einem äußeren schalenförmigen Element 2 übergriffen wird, wie dies aus Fig. 1 deutlich ersichtlich ist. Das äußere schalenförmige Element 2 überragt hiebei das innere schalenförmige Element 1, welches an einer Seite mit einer schematisch mit 3 bezeichneten Halterung zur Festlegung des gesamten Spiegels an einem nicht näher dargestellten Fahrzeug ausgebildet ist, und dient an dieser von der Halterung 3 abgewandten Seite zur Festlegung eines schematisch mit 4 bezeichneten Spiegels.

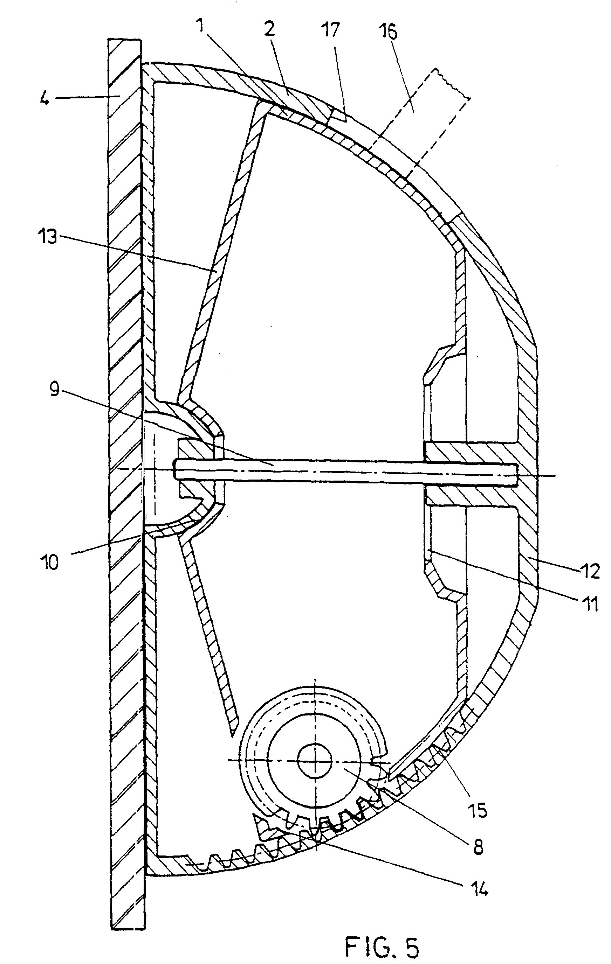

Wie insbesondere aus Fig. 1 ersichtlich, sind die schalenförmigen Elemente 1 und 2 jeweils mit Teile einer Kugeloberfläche bildenden Begrenzungsflächen ausgebildet, sodaß sich insgesamt eine großflächige Lagerung der Elemente 1 und 2 aneinander in großem Abstand von dem mit 5 bezeichneten Schwenkmittelpunkt ergibt. Zur Verschwenkung des den Spiegel 4 tragenden äußeren Elementes 2 relativ zum am Fahrzug festgelegten inneren Element 1 sind im Inneren des inneres Elementes 1 zwei Antriebsmotoren 6 angeordnet, welche über ein jeweils schematisch mit 7 bezeichnetes Untersetzungsgetriebe jeweils ein Ritzel 8 antreiben, welches durch eine Ausnehmung des inneren Elementes 1 vorragt und mit einer entsprechenden Verzahnung an der Innenfläche des äußeren Elementes 2 kämmt, wie dies bei der abgewandelten Ausführungsform gemäß Fig. 5 noch im Detail dargestellt wird.

Die maximale Verschwenkbewegung des beweglichen äußeren Elementes 2 relativ zum inneren Element 1 ist in Fig. 1 schematisch durch den Winkel a angedeutet und beträgt beispielsweise etwa ± 15°.

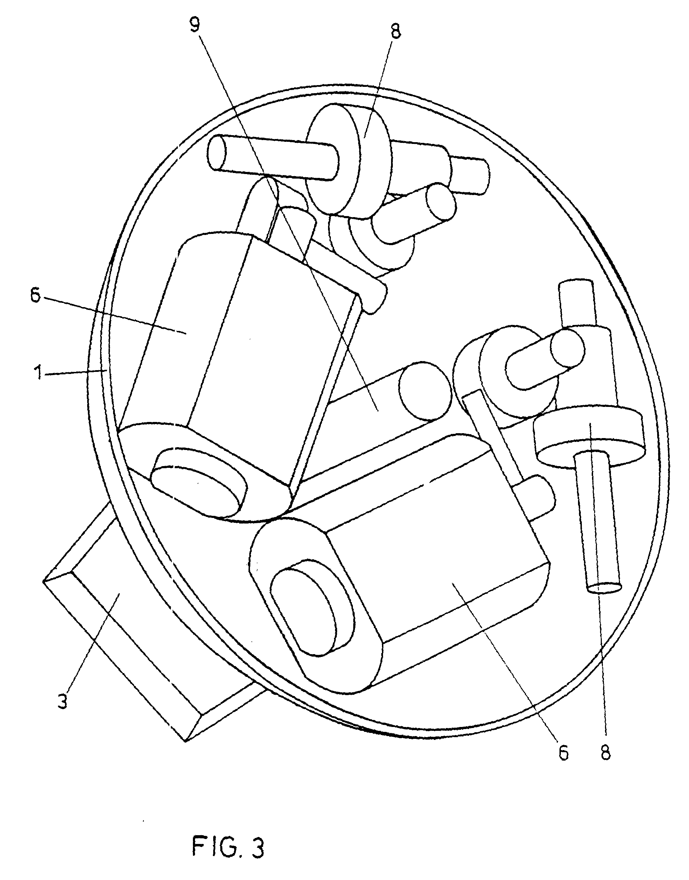

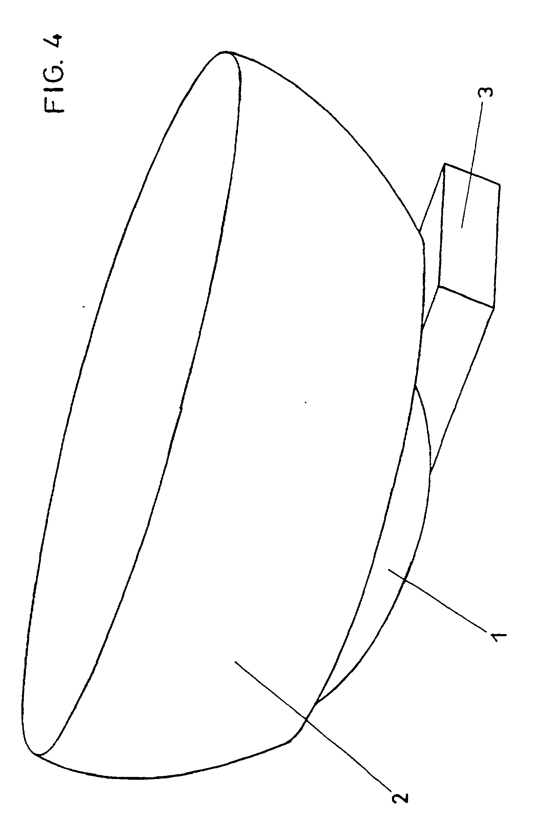

Bei der perspektivischen, räumlichen Darstellung gemäß den Fig. 3 und 4 ist die gegenseitige räumliche Anordnung der einzelnen Komponenten der Schwenkmechanik im Inneren des inneren schalenförmigen Elementes 1 angedeutet. In Fig. 3 ist wiederum die Positionierung der Motoren 6, der Untersetzungsgetriebe 7 sowie der Ritzel 8 ersichtlich. Weiters ist im Zentrum eine Verbindungsstange 9 angedeutet, welche in weiterer Folge zur zusätzlichen Festlegung des in Fig. 3 nicht dargestellten äußeren schalenförmigen Elementes 2 dient, wie dies auch in Fig. 5 näher gezeigt ist.

Bei der in Fig. 5 dargestellten abgewandelten Ausführungsform eines Rückspiegels umgibt das äußere schalenförmige Element 2 vollständig das innere schalenförmige Element 1, sodaß die gesamte, einen Teil einer Kugeloberfläche bildende Begrenzungsfläche des inneren Elementes 1 für die gegenseitige Abstützung und Lagerung der schalenförmigen Elemente 1 und 2 aneinander zur Verfügung steht. Weiters ist im Bereich des Schwenkmittelpunktes zur Verbesserung der gegenseitigen Abstützung ein balliges Lager 10 vorgesehen, wobei ausgehend von diesem balligen Lager 10 sich wiederum eine zentrale Verbindungsstange 9 durch eine Öffnung 11 an der Rückseite des inneren Elementes 1 bis zur hinteren Begrenzungsfläche 12 des äußeren Elementes 2 erstreckt und zu dessen Fixierung und Stabilisierung dient. Weiters ist vorgesehen, daß das innere Element 1 ausgehend von dem balligen Lager 10 mit einer schräg nach innen verlaufenden Außenkante 13 ausgebildet ist, um bei der Verschwenkbewegung der Elemente 1 und 2 eine Kollision zwischen diesen zu vermeiden. Ein an der Außenseite des äußeren Elementes 2 festlegbarer Spiegel ist wiederum mit 4 angdeutet.

In Fig. 5 ist weiters im Detail dargestellt, wie ein Ritzel 8 durch eine Ausnehmung 14 des inneren Elementes 1 vorragt und mit einer an der Innenfläche des äußeren Elementes 2 ausgebildeten Verzahnung 15 zur Verschwenkung der schalenförmigen Elemente 1 und 2 relativ zueinander kämmt. Falls eine Verschwenkung der Elemente 1 und 2 nur in einer Richtung unter Vorsehen eines Ritzels 8 gewünscht wird, ist hiebei die Ausbildung der Verzahnung 15 längs eines Kugelkreises an der Innenfläche des äußeren schalenförmigen Elementes 2 ausreichend.

Bei Vorsehen von zwei Ritzel 8 zur Erzielung einer universellen Bewegbarkeit, wie dies beispielsweise bei den Ausbildungen der vorangehenden Figuren gezeigt ist, muß die Verzahnung 15 sich auch in normal auf die Darstellungsebene der Fig. 5 erstreckenden Ebenen entlang der Innenfläche des äußeren Elementes 2 erstrecken, um ein Mitführen des jeweils anderen Ritzels 8 bei Betätigung des einen Ritzels 8 zu ermöglichen. Um ein Nachführen bzw. ein Abstimmen der Bewegungen der Ritzel 8 zur Erzielung einer gewünschten Schwenkposition des Spiegels 4 zu erzielen, kann weiters eine entsprechende Kopplung bzw. Steuerung der Antriebsmotoren der Ritzel 8 vorgesehen sein.

Die Festlegung des inneren Elementes 1 an einem Fahrzeug erfolgt hiebei über schematisch angedeutete Fortsätze 16, welche durch Ausnehmungen 17 des äußeren Elementes 2 hindurchtreten.

## Patentansprüche

1. Verstellbarer Rückspiegel, insbesondere Außenspiegel, für ein Kraftfahrzeug, wobei ein erstes Element (1) an dem Fahrzeug festlegbar ist und ein mit dem ersten Element schwenkbar verbundenes zweites Element (2) eine Halterung (3) für einen Spiegel (4) aufweist bzw. ausbildet, wobei die zwei Elemente (1,2) als einander wenigstens teilweise umgreifende schalenförmige Elemente ausgebildet sind und aneinander über einen Teil einer Kugeloberfläche bildende äußere und innere Begrenzungsflächen geführt bzw. gelagert sind und wobei ein Antrieb (6) zwischen dem ersten und dem zweiten Element (1,2) vorgesehen ist, dadurch gekennzeichnet, daß das äußere Element (2) an seiner Innenfläche teilweise mit einer sich längs eines Kugelkreises der Innenfläche des äußeren Elementes (2) erstreckenden Verzahnung (15) ausgebildet ist, mit welcher ein Ritzel (8) eines im Inneren des inneren Elementes (1) gelagerten Antriebes (6) für die Verstellung des äußeren Elementes (2) relativ zum inneren Element (1) kämmt.

2. Verstellbarer Rückspiegel nach Anspruch 1, dadurch gekennzeichnet, daß das Ritzel (8) des im Inneren des inneren Elementes (1) gelagerten Antriebes (6) durch eine Ausnehmung (14) des inneren Elementes (1) vorragt.

3. Verstellbarer Rückspiegel nach Anspruch 1 oder 2, dadurch gekennzeichnet, daß zwei gegebenenfalls unter Zwischenschaltung eines Untersetzungsgetriebes (7) mit Ritzel (8) ausgebildete Antriebsmotoren (6) im Inneren des inneren Elementes (1) gelagert sind, deren mit der Innenfläche des äußeren Elementes (2) kämmende Ritzel (8) miteinander einen im wesentlichen rechten Winkel einschließen und daß die mit den Ritzeln (8) kämmenden Verzahnungen (15) an der Innenfläche des äußeren Elementes (2) sich jeweils über einen dem anderen Ritzel (8) zugeordneten Verschwenkwinkel (a) des äußeren bezüglich des inneren Elementes entsprechenden Winkel bereich erstrecken.

4. Verstellbarer Rückspiegel nach Anspruch 1, 2 oder 3, dadurch gekennzeichnet, daß die Bewegung der Ritzel (8) bzw. der Antriebsmotoren (6) miteinander gekoppelt bzw. aufeinander abgestimmt ist.

5. Verstellbarer Rückspiegel nach einem der Ansprüche 1 bis 4,
dadurch gekennzeichnet, daß die Verschwenkbarkeit (a) der schalenförmigen Elemente (1, 2) zueinander ausgehend von einer mittleren Lage maximal ± 25°, insbesondere ± 15°, beträgt.

6. Verstellbarer Rückspiegel nach einem der Ansprüche 1 bis 5, dadurch gekennzeichnet, daß die zwei schalenförmigen Elemente (1, 2) im Bereich des Mittelpunktes (5) der kugelförmigen Oberflächen aneinander zusätzlich über ein balliges Lager (10) oder Kreuzgelenk abgestützt sind und daß das innere Element (1) ausgehend von dem balligen Lager (10) im Mittelpunkt mit einer schräg nach außen verlaufenden Kante (13) ausgebildet ist, deren Neigungswinkel relativ zu einem Durchmesser der kugelförmigen Oberfläche wenigstens dem maximalen Verschwenkwinkel (a) der schalenförmigen Elemente (1, 2) zueinander entspricht.

7. Verstellbarer Rückspiegel nach Anspruch 6, dadurch gekennzeichnet, daß ausgehend von dem balligen Lager (10) oder dem Kreuzgelenk in an sich bekannter Weise eine Verbindung (9) mit dem äußeren Element (2) an der vom Lager (10) abgewandten Seite (12) vorgesehen ist.

8. Verstellbarer Rückspiegel nach einem der Ansprüche 1 bis 7, dadurch gekennzeichnet, daß das äußere Element (2) das innere Element (1) vollständig umgibt und daß wenigstens ein Verbindungsfortsatz (16) zur Festlegung des inneren Elementes (1) am Fahrzeug durch eine Ausnehmung (17) in dem äußeren Element (2) hindurchgeführt ist.

9. Verstellbarer Rückspiegel nach einem der Ansprüche 1 bis 8, dadurch gekennzeichnet, daß die Achse(n) der(s) Antriebsritzel(s) (8) im Bereich der äußeren Umrandung des Rückspiegels im Innenraum des inneren Elementes (1) angeordnet ist (sind).

10. Verstellbarer Rückspiegel nach einem der Ansprüche 1 bis 9, dadurch gekennzeichnet, daß in an sich bekannter Weise das innere schalenförmige Element (1) am Fahrzeug festlegbar ist und daß das äußere schalenförmige Element (2) zumindest an der von der Befestigung (3) des i inneren Elementes (1) am Fahrzeug abgewandten Seite das innere Element (1) überragt und eine Halterung für einen Spiegel (4) ausbildet bzw. aufweist.

## Claims

1. Adjustable rearview mirror, especially an outside mirror, for a motor vehicle, whereby a first element (1) is affixable to the vehicle and a second element (2), rotatably attached to the first element, has or forms a mount (3) for a mirror (4), whereby the two elements (1, 2) are designed as dish-shaped elements that nest with one another at least partially and are guided or bear against one another via outside and inside areas of contact forming a segment of a spherical surface and whereby a drive (6) is provided between the first and the second element (1, 2), characterized in that the outer element (2) is designed on part of its inner surface with a gear-tooth system (15.) extending along a circular section of the inner surface of the outer element (2), with which a pinion (8) of a drive (6) mounted in the inside of the inner element (1) meshes for adjustment of the outer element (2) relative to the inner element (1).

2. Adjustable rearview mirror according to claim 1,
characterized in that the pinion (8) of the drive (6) mounted in the interior of the inner element (1) projects through a recess (14) of the inner element (1).

3. Adjustable rearview mirror according to claim 1 or 2, characterized in that two drive motors (6) designed with pinions (8), with a reducing gear (7) interposed if necessary, are mounted in the interior of the inner element (1), whose pinions (8) meshing with the inner surface of the outer element (2) together enclose an essentially right angle and characterized in that the gear-tooth systems (15) on the inner surface of the outer element (2) meshing with the pinions (8) each extend over an angular range corresponding to a swivel angle (a) associated with the other pinion (8) of the outer relative to the inner element.

4. Adjustable rearview mirror according to claim 1, 2 or 3, characterized in that the movement of the pinions (8) or the drive motors (6) is coupled together or coordinated with one another.

5. Adjustable rearview mirror according to one of claims 1 through 4, characterized in that the swivel capability (a) of the dish-shaped elements (1, 2) relative to one another starting from a central position amounts to a maximum of ±25°, especially ±15°.

6. Adjustable rearview mirror according to one of claims 1 through 5, characterized in that the two dish-shaped elements (1, 2) in the region of the center point (5) of the spherical surfaces are additionally supported against one another via s spherical bearing (10) or universal joint and characterized in that the inner element (1) is designed with one edge (13) running obliquely outward starting from the spherical bearing (10) in the center, whose angle of inclination relative to a diameter of the spherical surface corresponds to at least the maximum swivel angle (a) of the dish-shaped elements (1, 2) relative to one another.

7. Adjustable rearview mirror according to claim 6,
characterized in that a connection (9) with the outer element (2) on the side (12) away from the bearing (10) is provided starting from the spherical bearing (10) or the universal joint in a manner known per se.

8. Adjustable rearview mirror according to one of claims 1 through 7, characterized in that the outer element (2) fully encloses the inner element (1) and characterized in that at least one mounting extension (16) for attachment of the inner element (1) to the vehicle is passed through a recess (17) in the outer element (2).

9. Adjustable rearview mirror according to one of claims 1 through 8, characterized in that the axis (axes) of the drive pinion(s) (8) in the region of the outside edge of the rearview mirror is (are) located in the interior of the inner element (1).

10. Adjustable rearview mirror according to one of claims 1 through 9, characterized in that the inner dish-shaped element (1) is attachable to the vehicle in a manner known per se and characterized in that the outer dish-shaped element (2) projects beyond the inner element (1) at least on the side facing away from the attachment (3) of the inner element (1) to the vehicle and forms or has a mount for a mirror (4)

## Revendications

1. Rétroviseur ajustable, en particulier rétroviseur extérieur, pour un véhicule automobile, dans lequel un premier élément (1) peut être fixé sur le véhicule et un second élément (2), relié de façon pivotante au premier élément, présente ou forme une fixation (3) pour une glace de rétroviseur (4), dans lequel les deux éléments (1, 2) sont réalisés comme des éléments en forme de coque s'enveloppant mutuellement au moins en partie et sont amenés ou logés l'un par rapport à l'autre par une partie d'une périphérie extérieure et intérieure formant une surface sphérique, et dans lequel un élément d'entraînement (6) est prévu entre le premier et le second élément (1, 2), caractérisé en ce que l'élément extérieur (2) est réalisé au niveau de sa surface intérieure partiellement avec une denture (15) s'étendant le long d'une partie sphérique de la surface intérieure de l'élément extérieur (2), avec laquelle engrène un pignon (8) d'un élément d'entrainement (6) logé à l'intérieur de l'élément intérieur (1) pour le réglage de l'élément extérieur (2) par rapport à l'élément intérieur (1).

2. Rétroviseur ajustable selon la revendication 1, caractérisé en ce que le pignon (8) de l'élément d'entraînement (6) logé à l'intérieur de l'élément intérieur (1) fait saillie par un évidement (14) de l'élément intérieur (1).

3. Rétroviseur ajustable selon la revendication 1 ou 2, caractérisé en ce que deux moteurs d'entraînement (6) réalisés, éventuellement en intercalant un démultiplicateur (7), avec des pignons (8), sont logés à l'intérieur de l'élément intérieur (1), et dont les pignons (8) engrenant avec la surface intérieure de l'élément extérieur (2) forment ensemble un angle essentiellement droit, et en ce que les dentures (15) engrenant avec les pignons (8) au niveau de la surface intérieure de l'élément extérieur (2), s'étendent respectivement sur une zone angulaire correspondant à un angle de pivotement (a) coordonné à l'autre pignon (8) de l'élément extérieur par rapport à l'élément intérieur.

4. Rétroviseur ajustable selon la revendication 1, 2 ou 3, caractérisé en ce que le déplacement des pignons (8) est couplé ou coordonné avec les autres sur celui des moteurs d'entraînement (6).

5. Rétroviseur ajustable selon l'une des revendications 1 à 4, caractérisé en ce que l'amplitude de pivotement (a) des éléments en forme de coque (1, 2) l'un par rapport à l'autre *est,* en partant d'une position médiane, au maximum de ± 25°, en particulier de ± 15°.

6. Rétroviseur ajustable selon l'une des revendications 1 à 5, caractérisé en ce que les deux éléments en forme de coque (1, 2), dans la zone du point central (5) des surfaces sphériques, sont en outre supportés l'un l'autre par un palier bombé (10) ou un joint de cardan, et en ce que l'élément intérieur (1), en partant du palier bombé (10), au niveau du point central, est conçu avec une arête (13) s'étendant en oblique vers l'extérieur, et dont l'angle d'inclinaison par rapport à un diamètre de la surface sphérique correspond au moins à l'angle de pivotement maximal (a) des éléments en forme de coque (1, 2).

7. Rétroviseur ajustable selon la revendication 6, caractérisé en ce que, en partant du palier bombé (10) ou du joint de cardan, il est prévu d'une façon connue en soi un raccordement (9) avec l'élément extérieur (2) au niveau du côté (12) opposé au palier (10).

8. Rétroviseur ajustable selon l'une des revendications 1 à 7, caractérisé en ce que l'élément extérieur (2) entoure entièrement l'élément intérieur (1), et en ce qu'au moins un prolongement de raccordement (16) est amené par un évidement (17) dans l'élément extérieur (2) pour fixer l'élément intérieur (1) au véhicule.

9. Rétroviseur ajustable selon l'une des revendications 1 à 8, caractérisé en ce que le ou les axes du ou des pignons d'entraînement (8) est (sont) disposé(s) dans la zone de la bordure extérieure du rétroviseur à l'intérieur de l'élément intérieur (1).

10. Rétroviseur ajustable selon l'une des revendications 1 à 9, caractérisé en ce que l'élément intérieur en forme de coque (1) peut être fixé d'une façon connue en soi au véhicule et en ce que l'élément extérieur (2) en forme de coque dépasse de l'élément intérieur(1) au moins au niveau du côté opposé à la fixation (3) de l'élément intérieur (1) sur le véhicule et forme ou présente une fixation pour une glace de rétroviseur (4).
